# EUROPEAN PATENT APPLICATION

(11) **EP 0 673 149 A1**
(43) Date of publication of application: **20.09.1995**
(21) Application number: 95200561.9
(22) Date of filing: 07.03.1995
(51) Int. Cl.: H04N 1/401, H04N 5/217

(54) **Method and apparatus for correcting dark-signal non-uniformity of a photo-sensor**

(30) Priority: 15.03.1994 US 213348
(71) Applicant: MILES INC., Wilmington Massachusetts 01887-1011 (US)
(72) Inventor: Pandelaers, Patrick M., Andover, MA 01810 (US)
(74) Representative: Ramon, Charles Lucien

(57) **Abstract**

A method and apparatus for correction of dark signal non-uniformity in the output of a photosensor [200] such as a charged coupled device which uses a correction value [230] that is sub-level precise. A sub-level precise correction value [230] is combined with a pseudo-random noise signal [240] added to a digitized radiation sensor output. The result is truncated to produce a corrected value [250]. This corrected value is more accurate than a corrected value that did not use a sub-level precise correction value, but has the same number of bits as the analog-to-digital converter [220] that digitized the radiation sensor [200] output.

## Description

Photosensors are used to translate information such as graphic images and text into electrical signals. Radiation in the form of light reflects off of, or passes through, are scanned subject, and a sensor detects the various levels of radiation. Electronic signals produced by a photosensor are directly proportional to the image intensity. These signals are useful for transmission, storage, or modification of the scanned information.

Many modem scanning devices use charge coupled devices (CCD's). A CCD contains an array of photosensors. Light impinges on the photosensors of a CCD and charge is generated that is proportional to the light on each photosensor. The intensity of light on each photosensor is proportionally translated into a corresponding charge packet. The charge packets are transported by the CCD to a charge-to-voltage converter which converts the charge packets into an analog electrical voltage signal. Often, the analog signal output by the CCD is converted to a digital signal with an analog-to-digital converter. A digital signal can be processed by digital logic such as a computer, and a digital signal can be transmitted for long distances with minimal transmission error due to noise.

There is information loss due to the analog-to-digital conversion process. While the precision of an analog signal is limited only by noise, the precision and accuracy of a signal that has been digitized by an analog-to-digital converter is determined by the number of bits in the digital word and the differential non-linearity (DNL) of the analog-to-digital converter. The dynamic range of the analog-to-digital converter input is divided into 2ⁿ slices, where n is the number of bits in the word. An analog signal is converted into a digital signal by determining which particular slice of the input range the analog signal is in. In an ideal analog-to-digital converter with zero DNL, as the number of bits in the analog-to-digital converter increases, the precision of the digital output increases up to the limit of analog noise. Given an analog-to-digital converter with zero DNL, the ideal quantization Q would be equivalent to one least-significant bit (LSB). Q can be calculated from the Input Range of the analog-to-digital converter and n, the number of bits in the analog-to-digital converter, as: 1 LSB = Input Range / 2ⁿ = Ideal Q. The smaller the quantization the more precise the analog-to-digital converter output.

Any increase in the number of bits in an analog-to-digital converter is accompanied by an increase in the complexity and the cost of the analog-to-digital converter. A high quality graphic arts scanning apparatus requires very precise highspeed digitizing of the analog signal. In such a scanning apparatus, an analog-to-digital converter with many bits is both necessary and expensive. There is a need to keep the number of bits, and thereby the cost, of the analog-to-digital converter to a minimum.

Real-world analog-to-digital converters have a non-zero DNL. The DNL indicates the accuracy of the slice of the analog dynamic range. The DNL of an analog-to-digital converter is specified by its manufacturer, and indicates the range to which one least-significant bit (LSB) of the analog-to-digital converter is accurate. If the DNL of an analog-to-digital converter is specified to be +/- 0.5 LSB, for example, the smallest quantization step could range from quantization levels Q=0.5 LSB to Q=1.5 LSB. A system designer must take this into account when determining the actual output accuracy and precision of the analog-to-digital converter.

The number of "effective bits" of an analog-to-digital converter bits indicate the accuracy of the quantization levels when the DNL is taken into account. The effective number of bits depends on the ratio of the quantization to the effective quantization. In the case where one quantization step Q could be as much as 1.5 LSB levels, the ratio is 1.5 LSB / 1 LSB = 1.5. The number of analog-to-digital converter levels 2ⁿ is divided by the ratio 1.5 to calculate the number of effective bits f such that 2^{f}=2ⁿ / 1.5. If the analog-to-digital converter has 10 bits and +/- 0.5 LSB DNL, the number of effective bits would be 9.4. The effective number of bits is always less than the actual number of bits if the DNL is non-zero.

Reduction in the DNL of an analog-to-digital converter is therefore accomplished at additional cost of the analog-to-digital converter. For example, the desire to reduce the DNL may cause more bits to be needed in the analog-to-digital converter. More bits will reduce the DNL by compensating for the loss of effective bits due to the DNL. In a high quality scanning apparatus there is a need to operate within the constraints of the DNL of the analog-to-digital converter. It is important to do so without requiring any increase in the number of bits in the analog-to-digital converter.

Every photosensor in the CCD can exhibit a different output level when not exposed to light. For example, if all the photosensors are unexposed, the output can vary from one photosensor to the next. This dark signal non-uniformity is a constant characteristic of each photosensor at every level of illumination. If two photosensors output different levels when unexposed, they will also output equally different levels when exposed to an identical level of illumination.

Even half an analog-to-digital converter level of dark signal non-uniformity can cause streaking. If two adjacent photosensors have dark signal non-uniformity that are different by more than half an analog-to-digital converter level, the human eye can detect the difference between the two columns of pixels. The difference will appear as a line, or streak, through the image. There is a need, therefore, to correct for dark signal non-uniformity to the precision of a fraction of an analog-to-digital converter level to avoid streaking.

When scanning, in order to distinguish dark signal non-uniformity from actual differing light levels applied to the various photosensors, it is well known in the art that a correction technique is desirable and useful for accurate signal generation. In US. 4,602,291 to Temes, a basic level of dark signal non-uniformity calibration is disclosed. In calibration mode, the photosensors are deliberately not illuminated, and the output of each of the photosensors is read once. Based on the output of the photosensors, a correction value is calculated and stored in memory. When the apparatus is in operating mode, the correction value is combined with analog output of the photosensors using an analog arithmetic unit. The output of the analog arithmetic unit is fed into the analog-to-digital converter:

Because the correction value is added to the photosensor output with an analog arithmetic unit, the disclosed apparatus avoids doubling errors associated with purely digital correction. However, the use of an analog arithmetic unit results in the added cost of analog electronic components. Also, to avoid noise and to maintain an optimal dynamic range, it is important to keep the analog path as short as possible. Added analog components increase the analog path, and increase the noise in the system. The electrical properties of analog components can change over time and temperature variations, which makes an analog system less reliable. Added analog electronics can contribute noise to the system, which is a problem for very high precision equipment. Dark signal non-uniformity correction using a system such as the one described in US. 4,602,291 is usually an iterative process, since it is difficult to estimate the exact analog gain of the system. Also, any non-linearity in the digital-to-analog converter needs to be taken into account. It is typical to have 3 or 4 iterative correction passes, thereby requiring a potentially unacceptable processing time.

In US. 5,204,761 to Gusmano a more recent method of calibration with the objective of maximizing the dynamic range of the digital system is shown. Because the calibration signal is combined with the sensor output on the analog side of the analog-to-digital converter, the system can make maximum use of the dynamic range of the analog-to-digital converter. The system addresses some of the same issues as the present invention, but is a more expensive solution than the present invention in that it requires two digital to analog converters as well as memory for calibration and logic for timing and address generation. There is a need to maximize the dynamic range of the analog-to-digital converter, but to do so without the expense of the additional analog components shown in the prior art.

Also described in US. 5,204,761 is the process of "column-wise averaging" in the calibration process. When calibrating, a plurality of calibration data for each photosensor (each "column") is used. The average value of the plurality of calibration data is calculated. The average, and not an individual sample, is used in the correction value computation. The average is more useful than one sample because every system exhibits noise, and the noise is reduced by averaging.

The precision of a digital correction value is normally limited by the quantization precision of the analog-to-digital converter which converts the photosensor output to a digital signal. As discussed above, if there are n effective bits in the analog-to-digital converter, then there are 2ⁿ levels to which the digitized calibration signal can be assigned. If the calibration signal is between two analog-to-digital converter levels, it will be assigned to one level or the other. Repeated digital sampling of a calibration signal which is between two analog-to-digital converter levels will produce exactly the same result in each sample. Since each sample in the column-wise averaging process will have the same value, an average of many samples will produce the result of one analog-to-digital converter level. In systems where the correction information is stored digitally, calibration methods have been developed in the prior art to add a dither signal to the calibration signal during calibration to enable the calculation of a more precise correction signal. The more precise signal has a value that is between two of the analog-to-digital converter levels.

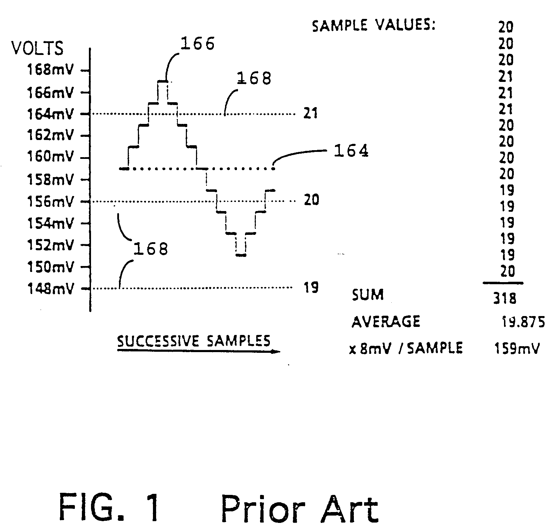

In US. 4,757,389 to Clark et al. a system is shown in which a dither signal is added to a constant analog signal to increase the precision of the digitized signal that results from the digital sampling of the analog signal. The dither signal has a zero mean average over time. When a sum of the dither signal and the constant signal is averaged over time, the sum will have the same average as the average of the constant signal alone. The digital signal that is the result of digitizing the sum of the constant signal and the dither signal has an average that is equal to the constant signal. The digital average of the sum of the dither signal and the constant signal will precisely reflect the value of the constant analog signal. This is because the average will result in a value that is in between two analog-to-digital converter levels if the constant signal is in between those levels. The sum signal will be the same level as it was without the dither when the dither value is zero, but may be other levels when the dither value is not zero. Since the dither has an average of zero over time, the averaged digitized sum will have a value more precise than repeated sampling of just the calibration signal. An example of this is shown in FIG. 1, and described below in the detailed description of the drawings.

The system shown in US. 4,757,389 does not use an A/D converter with a sufficient number of bits to allow the analog-to-digital converter quantization levels to be of the same order of magnitude of the noise inherent in the photosensor. Because of the coarseness of the analog-to-digital converter, dither is needed to increase the system noise such that the RMS of the noise is greater than the quantization precision. When the RMS noise is equal or greater to the quantization precision of the analog-to-digital converter, the human eye will be able to average out levels.

A method and apparatus for correcting for dark signal non-uniformity. The correction takes place such that the full range of the analog-to-digital converter provides meaningful data. The analog output from a photosensor is converted to a digital signal with an analog-to-digital converter. The output from the analog-to-digital converter is combined with a dark signal non-uniformity correction value and noise, thereby correcting for the dark signal non-uniformity. A correction value for the dark signal non-uniformity is derived from the column-wise average for each picture element. The correction value is more precise than the quantization of the analog-to-digital converter, with the result that more bits can be used for the correction than are in the analog-to-digital converter.

It is a general object of the present invention to correct digitally for dark signal non-uniformity.

It is a specific object of the invention to correct digitally for dark signal non-uniformity and obtain meaningful data for the full range of the analog-to-digital converter.

It is a another object of the invention to correct digitally for dark signal non-uniformity with no streaking at the effective LSB level.

It is a further object of the invention to correct digitally for dark signal non-uniformity without increasing the number of bits needed to represent the data.

It is a still further object of the invention to calculate a precise correction value for the dark signal non-uniformity in the CCD of a scanning device in such a way that the calibration mode does not require additional analog circuitry.

The invention will be best understood from a detailed description of a preferred embodiment thereof, selected for purposes of illustration, and presented with reference to the accompanying drawings in which:
FIG. **1** is a prior art graphical representation depicting a dither waveform superimposed on a constant signal;
FIG. **2** is a block diagram showing an embodiment of the correction apparatus according to the present invention;
FIG **3** is an example that shows the correction apparatus in operation; and,
FIG. **4** is a block diagram showing an embodiment of the calibration apparatus according to the present invention.

In FIG. **1** is a prior art example (US 4,757,389) in which an analog constant signal [164] is added to an analog dither signal [166]. In this example, the constant signal is level at 159mv. The dither waveform [166] has a mean value zero. The dotted lines [168] mark the thresholds of the analog-to-digital converter levels. Analog-to-digital converter level 19 is the range 148mv-156mv, so any signal that is between 148mv and 156mv (152⁺/₋ 4mv) will be read as level 19. Analog-to-digital converter level 20 is the range 156mv-164mv, and level 21 is the range 164mv-172mv. Note that the analog-to-digital converter is represented as being ideal and is not a real-world analog-to-digital converter in that it has a DNL of zero. The constant signal [164] with a level of 159mv maps to analog-to-digital converter level 20. A common way for the digital system to calculate the voltage input to an analog-to-digital converter is to multiply the level by the volts per sample. In this case ((level 20) * (8 ^{mv}/level)) = 160mv. A system without dither would thus consider the constant signal [164] which was actually 159mv to be 160mv. The use of dither allows the computation of a more precise value as described below.

Sixteen samples of the sum of the constant signal and the dither signal are taken. The values are shown on the right hand side of FIG. 1. The sum of the samples is 318. The average of the samples is 19.875. Note that 19.875 is more precise than either 19 or 20. The actual voltage can be calculated from the average: 19.875 * 8^{mv}/ₛₐₘₚₗₑ = 159mv. This example shows a sinusoidal dither waveform, but it will be apparent to those skilled in the art that any waveform that is symmetric about the x-axis and has an average of zero, including random white noise, will work just as well. It should also be apparent that asymmetric signals will work but produce less accurate results.

An example of the type of machine in which the calibration and correction apparatus of the present invention might be used is the HORIZON PLUS scanner manufactured by the Agfa Division of Miles Inc. In the operation of such a machine, the image to be scanned is placed on a rectangular transparent platen, and a linear array of photosensors is moved across the image, converting the light reflected off or through the image into analog electrical signals.

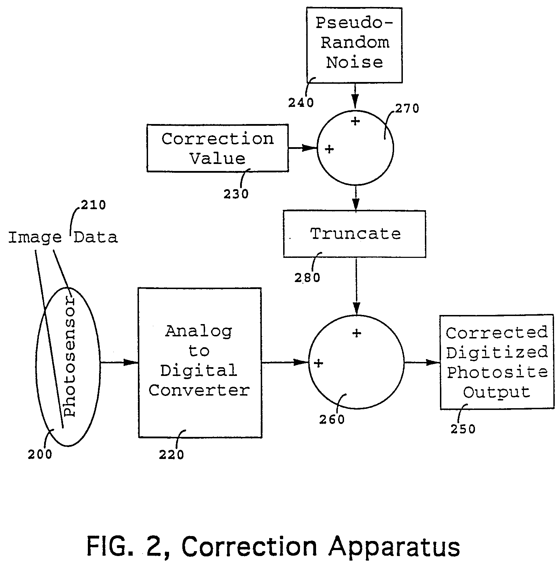

In the correction apparatus, disclosed in FIG. 2, a photosensor [200] is shown that receives image data [210]. The analog output of the photosensor [200] is converted by an analog-to-digital converter [220] into a digital electronic signal. A dark signal non-uniformity correction value [230] which is either positive or negative and which is associated with the particular photosensor [200] is added to a pseudo-random white noise signal [240]. The result of this sum [270] is truncated [280], and added [260] to the analog-to-digital converter [220] output. The result of the second sum [260] is a corrected output [250] that is accurate to the number of effective bits in the analog-to-digital converter.

The addition of the pseudo-random noise signal [240] to the dark signal non-uniformity correction value [230] has the effect of allowing the fractional component (also called the "sub-analog-to-digital converter level" component or "sub-level" component) of the correction value [230] to be effective. The "sub-level" component contributes to the correction even though the output of the analog-to-digital converter [220] is less precise than the precision of the correction value. The pseudo-random noise [240] serves to statistically weigh the fractional part of the correction value. This means that some corrected pixels are higher than they would have been without correction, and some are lower, but the includes the more precise correction value. The human eye averages out the noise, and that average includes the extra bits of precision. The correction is thus made in a manner that is even more precise than the quantization precision of the digital words that represent the image data. The addition of pseudo-random noise permits accurate correction with a correction value that is more precise than the output of the analog-to-digital converter and any fractional component of the dark signal non-uniformity is corrected for.

The correction values are determined in such a way that the correction value [230] is more precise than that the number of bits in the analog-to-digital converter. In the preferred embodiment, the correction value [230] is at least two bits more precise than the number of bits in the analog-to-digital converter. Two bits of sub-analog-to-digital converter level correction is a good match for the DNL of real-world analog-to-digital converters.

It should be clear to those skilled in the art that another mode of this same apparatus could make use of one adder to combine the white noise [240], the correction value [230], and the analog-to-digital converter output [220]. The output of the one adder could then be truncated. As long as the precision of the data is maintained, combining and truncating in a different order would produce similar results.

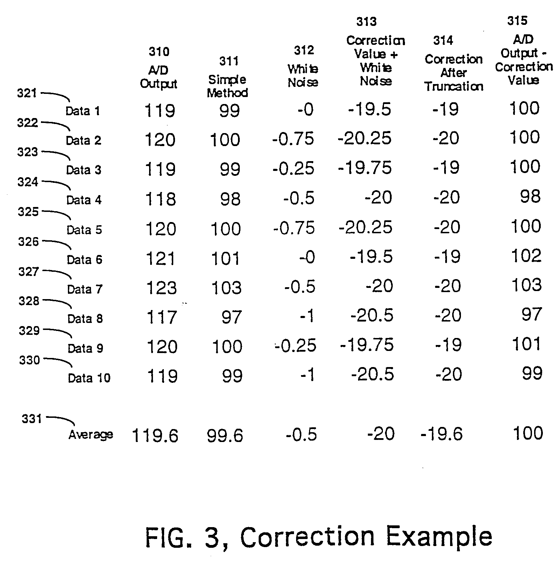

The operation of the apparatus disclosed in FIG. **2** is demonstrated by example in FIG. **3**. In FIG. **3**, the output of a photosensor column with an dark signal non-uniformity of 19.6 analog-to-digital converter levels is shown. The signal input to the photosensor should be level 100 on the analog-to-digital converter. Ten consecutive analog-to-digital converter output samples from that column are shown in FIG. **3**, column [310]. The average of those samples [310] is shown in row [331] to be 119.6. The average is important, because the human eye will average out the data from the same column.

Since the dark signal non-uniformity is 19.6 analog-to-digital converter levels, an ideal correction would correct 19.6 analog-to-digital converter levels. A simple method would round the 19.6 to 20, and add -20 from each data in column [310]. The result of this kind of correction is shown in column [311]. The average of column [311] is 99.6, which does not correct for 0.4 analog-to-digital converter levels. If this 0.4 level error is combined with poor analog-to-digital converter DNL, it would be exaggerated further.

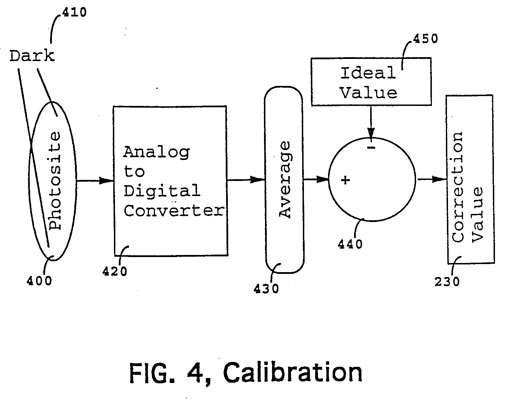

In the present invention there can be any degree of precision associated with the sub-analog-to-digital converter level (also called "sub-level") component of the correction value. In this example two sub-level bits of correction is shown. With two bits, the sub-level correction can be 0, 1/4, 1/2, or 3/4. The correction closest to -19.6 is -19.5, so a correction of -19.5 would be chosen during the calibration process shown in FIG. **4**.

The correction value - 19.5 is added to zero mean white noise of sub-level precision. This zero mean white noise is generated artificially by use of any of the numerical computation procedures well known in the art. The zero mean white noise ranges from -0.5 to 0.5 analog-to-digital converter levels. A constant is added to the noise to compensate for the truncation, as discussed below. In this example, the constant -0.5 is added to the white noise. The result of adding the constant value is white noise in the range 0 to -1.

Example white noise values are shown in column [312]. Since there are two bits of sub-level correction, the white noise in column [312] has only the values 0, 0.25, 0.50, 0.75 and 1. The correction value of -19.5 is added to the white noise values from column [312], and the result of that addition is shown in column [313]. Note that the average of the correction values have an average of -20, not -19.5. This is because the white noise [312] has an average of -0.5.

The next step is truncation. Truncation effectively reduces the average of the signal by 0.5. The values in column [313] are truncated and the truncated values are shown in column [314]. The average [331] of the values after truncation [314] in this example is -19.6. This is because of the distribution of the white noise over the small sample range (10 data points). - 19.5 would be the expected data for the average of the truncated correction values [314]. The values after truncation [314] are subtracted from the analog-to-digital converter output [310] and the result is the corrected values **315**. The corrected values have an average [331] of 100, which is the expected value after correction.

The calibration of the correction apparatus used to obtain the correction value [230] in FIG. **2** is disclosed in FIG. **4**. The photosensor [400] is not exposed to any light [410]. The output of the analog-to-digital converter [420] is averaged for each pixel over time by an average calculator [430] resulting in a per-pixel average. The per-pixel average is subtracted [440] from an ideal value [450] and the result is the correction value [230].

The correction value [230] is more precise than the analog-to-digital converter word in that contains information in sub-level bits. The random noise inherent in the photosensor output will modulate the photosensor output around the "actual" analog-to-digital converter input value. An average can be calculated to any level of precision, so the average can be calculated to more bits of precision than the number of bits in the analog-to-digital converter. The apparatus designer should design the number of sub-level bits to match the non-linearity of the analog-to-digital converter.

The calibration of the present invention takes advantage of the random error inherent in the photosensor output. No dither generator is necessary because the analog-to-digital converter is matched to the photosensor. Specifically, the RMS noise of the photosensor should be greater or equal to one analog-to-digital converter level.

While this invention has been described with reference to a specific embodiment, it will be understood by those skilled in the art that various modifications, substitutions, omissions and changes may be made and equivalents may be substituted without departing from the true spirit of the invention. Accordingly, it is intended that the scope of the present invention be limited solely by the following claims.

## Claims

1. In a system that uses at least one radiation-responsive sensor [200], a method for correcting for dark signal non-uniformity of said at least one radiation-responsive sensor [200], comprising the steps of:
(A) converting an analog output signal from said at least one radiation-responsive sensor [200]to a digital output signal with an analog-to-digital converter[220];
(B) generating a digital dark signal non-uniformity correction value signal [230] for and specific to each of said at least one radiation-responsive sensor[200], said digital dark signal non-uniformity correction value signal being more precise than one least-significant bit of said analog-to-digital converter[220];
(C) generating a digital noise signal [240] to produce a digital noise signal [240] that is more precise than one least-significant bit of said analog-to-digital converter; and,
(D) combining said digital dark signal non-uniformity correction value signal [230] and said digital noise signal [240] with said digital output signal [220] of said analog-to-digital converter, thereby correcting for said dark signal non-uniformity of said at least one radiation sensor [200].

2. The method of claim **1** wherein step D further comprises the step of adding a constant value digital signal, said constant value digital signal being more precise than one least-significant bit of said analog-to-digital converter [220], said addition being followed by truncation.

3. The method of claim **1** wherein step C further comprises the step of adding a constant value digital signal, said constant value digital signal being more precise than one least-significant bit of said analog-to-digital converter, said addition being followed by truncation.

4. The method of claim **1** wherein said system has a plurality of radiation-responsive sensors [200] and steps (A) through (D) are performed for each such radiation-responsive sensor.

5. The method of claim **1** wherein said digital noise signal [240] is artificially generated.

6. The method of claim **1** wherein said digital noise signal [240] is generated by digitizing a natural noise signal.

7. The method of claim **1** wherein said digital noise signal [240] is white noise.

8. The method of claim **1** wherein said at least one radiation-responsive sensor [200] is a photosensor.

9. The method of claim **1** wherein said at least one radiation-responsive sensor[200] is a charge-coupled device.

10. The method of claim **1** wherein said digital dark signal non-uniformity correction value signal [240] is obtained by a calibration method, comprising the steps of:
(A) exposing said at least one radiation-responsive sensor [200] to a reference level of radiation [410];
(B) converting an analog output signal from said at least one radiation-responsive sensor [200] during step (A) to a digital output signal [420] with an analog-to-digital converter;
(C) repeating steps (A) and (B) at least once; and,
(D) statistically processing the digital output signals of step (B) to produce a measurement value signal [430] with a precision greater than one least-significant bit of said analog-to-digital converter; and,
(E) subtracting the measurement value signal [430] of step (D) from an ideal value signal [450] to calculate a subtraction result [440] that is as precise as said measurement value signal [430], the subtraction result being said digital dark signal non-uniformity correction value signal [230].

11. The method of claim **10** wherein said statistical processing is averaging.

12. The method of claim **10** wherein said statistical processing is median filtering.

13. The method of claim **10** wherein the reference radiation level [410] is less than a minimum amount of radiation detectable by said at least one radiation-responsive sensor [200].

14. An apparatus for correcting for dark signal non-uniformity of at least one radiation-responsive sensor [200], said apparatus comprising:
(A) converter means for converting an analog output signal from said at least one radiation-responsive sensor to a digital output signal with an analog-to-digital converter [220];
(B) correction value generating means for generating a dark signal non-uniformity correction value signal [230] for and specific to said at least one radiation-responsive sensor [200] that is more precise than one least-significant bit of said converter means;
(C) noise generating means for generating a digital noise signal [240] to produce a digital noise signal [240] that is more precise than one least-significant bit of said converter means; and,
(D) combining means for combining said dark signal non-uniformity correction value signal [230] and said digital noise signal [240] with the digital output signal of said converter means [220], thereby correcting for said dark signal non-uniformity of said at least one radiation sensor [200].

15. The apparatus of claim **14** wherein said combining means also combines a constant value signal followed by truncation.

16. The apparatus of claim **14** wherein said noise digitizing means also combines a constant value digital signal followed by truncation.

17. The apparatus of claim **14** wherein said apparatus has a plurality of radiation-responsive sensors [200] and elements (A) through (D) are operated on each radiation-responsive sensor [200].

18. The apparatus of claim **14** wherein said noise generating means artificially produces digital noise [240].

19. The apparatus of claim **14** wherein said noise generating means digitizes a natural noise signal to produce said digital noise signal [240].

20. The apparatus of claim 14 wherein said noise generating means produces white noise.

21. The apparatus of claim **14** wherein said at least one radiation-responsive sensor [200] is a photosensor.

22. The apparatus of claim **14** wherein said at least one radiation-responsive sensor [200] is a charge-coupled device.

23. The apparatus of claim **14** wherein the dark signal non-uniformity correction value signal [230] is obtained by a calibration apparatus, comprising:
(A) exposing means for exposing said at least one radiation-responsive sensor [200] to a reference level of radiation [410];
(B) converting means for converting an analog output signal generated from said at least one radiation-responsive sensor [200] during exposure to said reference level of radiation [410] to a digital output signal [420];
(C) means for repeatedly operating elements (A) and (B) at least once;
(D) processing means for statistically processing a plurality of digital output signals produced by said converting means to produce a measurement value signal [430] with a precision greater than one least-significant bit of said converter means; and,
(E) means for subtracting the measurement value signal [430] from an ideal value signal [450] to calculate the dark signal non-uniformity correction value signal [230].

24. The apparatus of claim **23** wherein said processing averages said plurality of digital output signals.

25. The apparatus of claim **23** wherein said processing means is a means for median filtering.

26. The apparatus of claim **23** wherein the reference radiation level [410] is less than a minimum amount of radiation detectable by said radiation-responsive sensor [200].
